# EUROPEAN PATENT SPECIFICATION

(11) **EP 3 391 153 B1**
(45) Date of publication and mention of the grant of the patent: **12.06.2024**
(21) Application number: 16876110.4
(22) Date of filing: 15.08.2016
(51) Int. Cl.: G03G 13/10, G03G 13/20, G03G 9/087, B41M 1/34, B44C 1/175, G03G 15/00, G03G 15/22

(54) **LASER PRINTED PHOTO ON GLASS ARTICLE METHOD THEREOF**
LASERDRUCKFOTO AUF GLASARTIKEL, VERFAHREN DAFÜR
PHOTO IMPRIMÉE PAR LASER SUR UN ARTICLE EN VERRE ET PROCÉDÉ À CET EFFET

(30) Priority: 16.12.2015 MY PI2015704589
(43) Date of publication of application: 24.10.2018
(73) Proprietor: Eng Kah Enterprise Sdn Bhd, 11900 Penang (MY)
(72) Inventor: EWE ENG KAH, 11900 Penang (MY)
(74) Representative: Sahuquillo Huerta, Jesús
(86) International application number: PCT/MY2016/000050
(87) International publication number: WO 2017/105214

(56) References cited:
- EP-A1- 2 068 197
- EP-A1- 2 239 238
- WO-A1-2014/088410
- WO-A1-2014/198167
- JP-A- 2003 261 354
- JP-A- 2008 015 190
- US-A1- 2008 220 188
- US-A1- 2009 183 828
- US-A1- 2011 217 088

## Description

### 1. TECHNICAL FIELD OF THE INVENTION

The present invention generally relates to a method of glass article laser printing of photo images (with 3-dimension (3D) or emboss effect), comprising steps of: pre-treating said glass article with acid or alkali solution, coating a layer of composition on said article, ageing said article surface under room or ambient temperature, laser-printing on said glass article surface with at least a laser printing means, and surface finishing said glass article surface by heating process. Alternatively, said surface finishing can be achieved by ultra-violet light irradiation, washing with fluid, lamination, or a combination thereof.

### 2. BACKGROUND OF THE INVENTION

Laser printing is widely known technique to transfer CMYK (cyan, magenta, yellow, and key/black) color toners to a charged article surface; the charged article surface is achieved by streams of laser irradiation. Such technique is only limited to fibrous substrate such as paper, plastic, or metal. Direct color printing on glass can only be achieved through silk screen printing. The color printing is limited to few types of colour output, and unable to portray image sharpness of photo image.

Other known method such as hydro transfer or hydro-printing as disclosed in JP2009083281 (A) and CN 103042875 A by means of water transfer printing paper. However, such printing requires numerous of process steps and not able to produce color and image sharpness of a photo image. Besides, the printed surface using the said technique will be smooth and glossy, unlike the present invention which is able to produce 3D or emboss printed image.

Therefore, the present invention can offer a solution to alleviate aforesaid shortcomings in the conventional glass article printing by direct laser irradiation and color printing on the glass article surface.

Document EP2239238 discloses a glass article comprising (i) a glass sheet, (ii) an adhesion layer provided on at least part of said glass sheet and (iii) an ink layer, forming an image, provided on at least part of said adhesion layer, wherein the adhesion layer comprises an acrylic resin.

### 3. SUMMARY OF THE INVENTION

Accordingly, it is the primary aim of the present invention to provide a method to laser print photo images and inscriptions directly on a glass article surface.

It is yet an object of the present invention to provide a method print monochrome or colored images, or inscriptions on glass articles.

It is yet an object of the present invention to replace indirect and conventional glass article printing such as hydro-printing or silk screen printing.

It is yet an object of the present invention to apply laser printing onto glass article surface.

It is yet an object of the present invention to enable a laser printing imagery resolution of at least 3,000 pixels per inch (118 pixels per mm) on the glass article.

It is yet an object of the present invention to provide said glass article surface with laser printing resistance to artificial light, sunlight, hydrocarbons such as alcohol, aromatic hydrocarbons such as perfume, and water.

The invention is defined by the appended claims.

### 4. BRIEF DESCRIPTION OF THE DRAWINGS

Other aspect of the present invention and their advantages will be discerned after studying the Detailed Description in conjunction with the accompanying drawings in which:
FIG. 1 shows an exemplary method to produce a laser printing glass article for photo image.
FIG. 2 shows a side view of the present invention.

### 5. DETAILED DESCRIPTION OF THE DRAWINGS

In the following detailed description, numerous specific details are set forth in order to provide a thorough understanding of the invention. However, it will be understood by the person having ordinary skill in the art that the invention may be practised without these specific details. In other instances, well known methods, procedures and/or components have not been described in detail so as not to obscure the invention.

The invention will be more clearly understood from the following description of the embodiments thereof, given by way of example only with reference to the accompanying drawings, which are not drawn to scale.

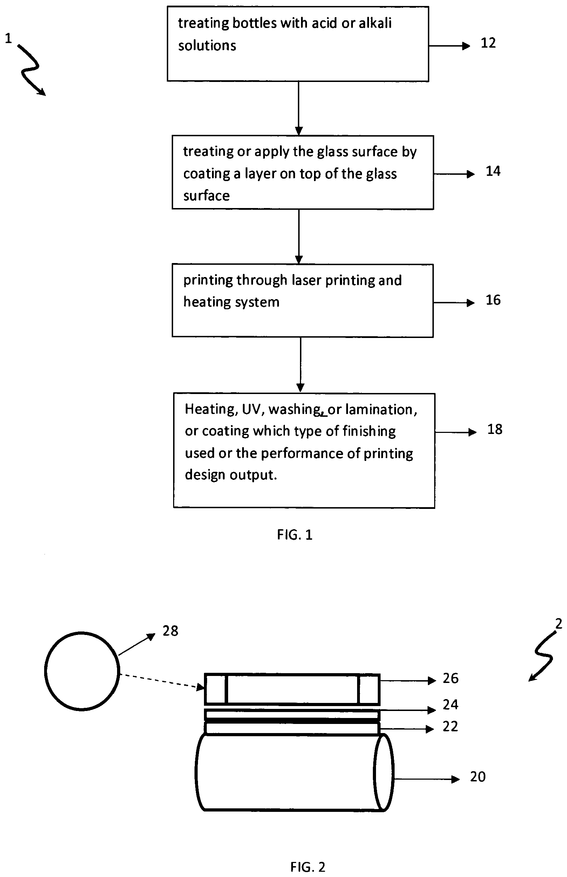

Referring now to FIG. 1, there is shown an exemplary method of glass article laser printing of photo image (1), comprising steps of: coating a layer of composition on a treated glass article surface (14); ageing said glass article surface from step (14) at room or ambient temperature; laser-printing said glass article surface with at least a laser printing means; and surface finishing said glass article surface in step (18) by a heating process.

Said composition comprising ink/color pigment, thinner, catalyst, wetting agent, solvent, binder, flow agent, defoamer, resin, or a combination thereof; and said glass article surface finishing further comprising ultra-violet light irradiation, washing with fluid, lamination, or a combination thereof.

Alternatively, said glass article surface is pre-treated with acid or alkali solution (12). The surface is allowed to dry before proceed to step (14).

Referring to FIG. 2, there is shown a side view of the present invention. A glass article laser printing of photo image (2) comprising; a glass article (20), a layer of composition (24) is applied said article (20) thereon, at least a laser printing means (26) abuts said layer (24) to enable color toners transfer thereon. Said laser printing means (26) receives photo imagery data files or formats:- for example, raster and/or vector formats such as JPG, GIF, PNG, BITMAP(BMP), TIFF, SVG, or the like, from a computing means (28) demarcated by a dotted arrow, abuts said layer of composition (24) to enable color toners transfer thereon. Alternatively, a layer of acid or alkali solution (22) is disposed said glass article (20) surface and the layer of composition therebetween (24).

Said laser printing is preferably color toner type comprising CYMK (cyan, yellow, magenta, and key/black) color toners; however, it can produce a monochrome or color printing, or a combination thereof, on said glass article surface. Preferably, glass article is a bottle, jar, container, or the like with flat, curve, or uneven surface. The laser printing means is capable to print imagery resolution of preferably more than 3,000 pixels per inch (118 pixels per mm). However, other imagery resolution is still applicable as long as portrays a clear image.

While the present invention has been shown and described herein in what are considered to be the preferred embodiments thereof, illustrating the results and advantages over the prior art obtained through the present invention, the invention is not limited to those specific embodiments. Thus, the forms of the invention shown and described herein are to be taken as illustrative only and other embodiments may be selected without departing from the scope of the present invention, as set forth in the claims appended hereto.

## Claims

1. A method of glass article laser printing of photo image (1), comprising steps of:
i. coating a layer of composition on a treated glass article surface (14);
ii. ageing said glass article surface from step i (14);
iii. laser-printing said glass article surface (16) with at least a laser printing means; and
iv. surface finishing said glass article surface in step iii (18) by a heating process;
wherein said composition comprises ink/color pigment, thinner, catalyst, wetting agent, solvent, binder, flow agent, defoamer, resin, or a combination thereof; and
said glass article surface finishing further comprises ultra-violet light irradiation, washing with fluid, lamination, or a combination thereof in step iv (18); and
the ageing of said glass article surface from step i (14) occurs at room or ambient temperature.

2. The method of glass article laser printing of photo image as claimed in Claim 1 wherein said glass article surface is pre-treated by acid or alkali solution (12).

3. The method of glass article laser printing of photo image as claimed in Claim 1 wherein said laser-printing means is toner type comprising CYMK (cyan, yellow, magenta, and key/black) color toners.

4. The method of glass article laser printing of photo image as claimed in Claim 1 or 3 wherein said laser-printing means receives photo imagery data files or formats from a computing means (28).

5. The method of glass article laser printing of photo image as claimed in Claim 1 or 3 or 4 wherein said laser-printing means is capable to print photo imagery resolution of more than 3,000 pixels per inch (118 pixels per mm).

6. The method of glass article laser printing of photo image as claimed in Claim 1 or 3 to 5 wherein said laser-printing means produces monochrome or color printing, or a combination thereof, on said glass article surface with 3D(dimensional or emboss effect).

7. The method of glass article laser printing of photo image as claimed in Claim 1 wherein said glass article is a bottle, jar, or container with flat, curve, or uneven surface.

8. A glass article with a laser printed photo image (2), comprising:
a glass article (20);
a layer of composition (24) applied on said surface (20) thereon;
the layer of composition is aged;
a photo image applied onto the aged layer of composition; and
a surface finishing applied onto the photo image
said photo image is applied onto the layer of composition (24) by a laser printing means (26) capable of receiving imagery data files or formats from a computing means (28);
wherein
an acid or alkali layer (22) is disposed between the glass article (20) and the layer of composition (24);
said layer of composition is aged at room or ambient temperature;
said surface finishing is applied by a heating process and ultra-violet light irradiation, washing with fluid, lamination, or a combination thereof and
said laser printing means (26) is capable of printing photo imagery.

9. A glass article with a laser printed photo image (2) as claimed in Claim 8, wherein said photo imagery is with resolution of more than 3,000 pixels per inch (118 pixels per mm).

10. A glass article with a laser printed photo image (2) as claimed in Claim 8, wherein said photo imagery is with 3-dimensional (3D) or emboss color image.

## Patentansprüche

1. Verfahren zum Laserdrucken eines Fotobildes (1) auf einen Glasartikel, dass die folgenden Schritte umfasst:
i. Auftragen einer Schicht der Zusammensetzung auf die Oberfläche eines behandelten Glasgegenstands (14);
ii. Alterung der Oberfläche des Glasartikels aus Schritt i (14);
iii. Laserbeschriftung der Oberfläche des Glasartikels (16) mit mindestens einem Laserdrucker; und
iv. Oberflächenbearbeitung der Oberfläche des Glasartikels in Schritt (18) durch ein Heizverfahren;
wobei die Zusammensetzung Tinte/Farbpigment, Verdünner, Katalysator, Benetzungsmittel, Lösungsmittel, Bindemittel, Fließmittel, Entschäumer, Harz oder eine Kombination davon umfasst; und
wobei die Oberflächenveredelung des Glasartikels ferner die Bestrahlung mit ultraviolettem Licht, das Waschen mit einer Flüssigkeit, das Laminieren oder eine Kombination davon in Schritt iv (18) umfasst; und
die Alterung der Oberfläche des Glasartikels aus Schritt i (14) bei Raum- oder Umgebungstemperatur erfolgt.

2. Verfahren zum Laserdrucken eines Fotobildes auf einen Glasartikel nach Anspruch 1, wobei die Oberfläche des Glasartikels mit einer Säure- oder Laugenlösung (12) vorbehandelt wird.

3. Verfahren zum Laserbedrucken von Glasartikeln mit einem Fotobild nach Anspruch 1, wobei das Laserdruckmittel vom Tonertyp ist und Folgendes umfasst CYMK-Farbtoner (Cyan, Gelb, Magenta und Key/Schwarz).

4. Verfahren zum Laserbedrucken von Glasartikeln mit einem Fotobild nach Anspruch 1 oder 3, wobei die Laserdruckeinrichtung Fotobilddateien oder -formate von einer Recheneinrichtung (28) empfängt.

5. Verfahren zum Laserbedrucken von Glasartikeln mit einem Fotobild nach Anspruch 1 oder 3 oder 4, wobei die Laserdruckeinrichtung in der Lage ist, Fotobilder mit einer Auflösung von mehr als 3.000 Pixeln pro Zoll (118 Pixel pro mm) zu drucken.

6. Verfahren zum Laserdrucken eines Fotobildes auf einen Glasartikel nach Anspruch 1 oder 3 bis 5, bei dem die Laserdruckeinrichtung einen monochromen oder farbigen Druck oder eine Kombination davon auf der Oberfläche des Glasartikels mit 3D-(Dimensions- oder Präge-)Effekt erzeugt.

7. Verfahren zum Laserdrucken eines Fotobildes auf einen Glasartikel nach Anspruch 1, wobei der Glasartikel eine Flasche, ein Glas oder ein Behälter mit flacher, gekrümmter oder unebener Oberfläche ist.

8. Glasartikel mit Laserdruck eines Fotobildes (2), umfassend:
ein Glasartikel (20);
eine Schicht aus einer Zusammensetzung (24), die auf die Oberfläche (20) aufgebracht ist;
die Schicht der Zusammensetzung ist gealtert;
ein Fotobild, das auf die gealterte Schicht der Zusammensetzung aufgebracht wird; und
eine auf das Fotobild aufgebrachte Oberflächenveredelung
das Fotobild auf die Schicht der Zusammensetzung (24) durch ein Laserdruckmittel (26) aufgebracht wird, das in der Lage ist, Bilddatendateien oder -formate von einem Computermittel (28) zu empfangen;
wobei
eine Säure- oder Alkalischicht (22) zwischen dem Glasartikel (20) und der Schicht der Zusammensetzung (24) angeordnet ist;
die Schicht der Zusammensetzung wird bei Raum- oder Umgebungstemperatur gealtert;
die Oberflächenveredelung durch einen Erhitzungsprozess und Bestrahlung mit ultraviolettem Licht, Waschen mit Flüssigkeit, Laminieren oder eine Kombination davon erfolgt und
das Laserdruckmittel (26) in der Lage ist, Fotobilder zu drucken.

9. Glasartikel-Laserdruck eines Fotobildes (2) nach Anspruch 8, wobei das Fotobild eine Auflösung von mehr als 3.000 Pixeln pro Zoll (118 Pixel pro mm) aufweist.

10. Glasartikel-Laserdruck eines Fotobildes (2) nach Anspruch 8, wobei das Fotobild ein dreidimensionales (3D) oder geprägtes Farbbild ist.

## Revendications

1. Procédé d'impression laser d'une image photographique (1) sur un article en verre, comprenant les étapes suivantes :
i. l'application d'une couche de composition sur la surface traitée d'un article en verre (14) ;
ii. le vieillissement de la surface de l'article en verre à partir de l'étape **i** (14) ;
iii. impression au laser de la surface de l'article en verre (16) avec au moins un moyen d'impression au laser ; et
iv. finition de la surface de l'article en verre à l'étape (18) par un processus de chauffage ;
dans laquelle ladite composition comprend un pigment d'encre/de couleur, un diluant, un catalyseur, un agent mouillant, un solvant, un liant, un agent d'écoulement, un antimousse, une résine ou une combinaison de ceux-ci ; et
ladite finition de la surface de l'article en verre comprenant en outre une irradiation par lumière ultraviolette, un lavage avec un fluide, un laminage ou une combinaison de ceux-ci à l'étape **iv** (18) ; et
le vieillissement de la surface de l'article en verre à partir de l'étape **i** (14) se produit à température ambiante.

2. Procédé d'impression laser d'une photo sur un article en verre selon la revendication 1, dans lequel la surface de l'article en verre est prétraitée par une solution acide ou alcaline (12).

3. Procédé d'impression laser d'une image photographique sur un article en verre, selon la revendication 1, dans lequel le moyen d'impression laser est de type toner et comprend les éléments suivants toners couleur CYMK (cyan, jaune, magenta et clé/noir).

4. Procédé d'impression laser d'une image photographique sur un article en verre selon les revendications 1 ou 3, dans lequel ledit moyen d'impression laser reçoit des fichiers ou des formats de données d'imagerie photographique d'un moyen informatique (28).

5. Procédé d'impression laser d'une image photographique sur un article en verre selon la revendication 1, 3 ou 4, dans lequel le moyen d'impression laser est capable d'imprimer une image photographique d'une résolution supérieure à 3 000 pixels par pouce (118 pixels par mm).

6. Procédé d'impression laser d'une photo sur un article en verre selon la revendication 1 ou les revendications 3 à 5, dans lequel les moyens d'impression laser produisent une impression monochrome ou couleur, ou une combinaison des deux, sur la surface de l'article en verre avec un effet 3D (dimensionnel ou de gaufrage).

7. Méthode d'impression laser d'une image photographique sur un article en verre selon la revendication 1, dans laquelle l'article en verre est une bouteille, un bocal ou un récipient dont la surface est plate, incurvée ou irrégulière.

8. Article en verre pour l'impression au laser d'une photo (2), comprenant :
un article en verre (20) ;
une couche de composition (24) appliquée sur ladite surface (20) ;
la couche de composition est vieillie ;
une image photographique appliquée sur la couche de composition vieillie ; et
une finition de surface appliquée à l'image photographique
ladite image photographique est appliquée sur la couche de composition (24) par un moyen d'impression laser (26) capable de recevoir des fichiers ou des formats de données d'imagerie d'un moyen informatique (28) ;
dans lequel
une couche acide ou alcaline (22) est disposée entre l'article en verre (20) et la couche de composition (24) ;
cette couche de composition est vieillie à température ambiante ;
ladite finition de surface est appliquée par un processus de chauffage et d'irradiation à la lumière ultraviolette, par lavage avec un fluide, par laminage, ou par une combinaison de ceux-ci, et
ledit moyen d'impression laser (26) est capable d'imprimer des images photographiques.

9. Article en verre imprimé au laser d'une image photographique (2) selon la revendication 8, dans lequel ladite image photographique a une résolution supérieure à 3 000 pixels par pouce (118 pixels par mm).

10. Article en verre imprimé au laser d'une image photographique (2) selon la revendication 8, dans lequel ladite image photographique est une image tridimensionnelle (3D) ou une image couleur en relief.
